# EUROPÄISCHE PATENTSCHRIFT

(11) **EP 1 953 492 B1**
(45) Veröffentlichungstag und Bekanntmachung des Hinweises auf die Patenterteilung: **08.08.2018**
(21) Anmeldenummer: 08001924.3
(22) Anmeldetag: 01.02.2008
(51) Int. Cl.: F41H 5/04, F41H 5/26

(54) **Panzerungsscheibe**
Armoured glass
Vitre blindée

(30) Priorität: 02.02.2007 DE 202007001565 U
(43) Veröffentlichungstag der Anmeldung: 06.08.2008
(73) Patentinhaber: ISOCLIMA S.p.A., 35042 Este (IT)
(72) Erfinder: Engl, Andreas, 80689 München (DE)
(74) Vertreter: Seitz, Ralf Hans Frank

(56) Entgegenhaltungen:
- EP-A- 1 004 433
- WO-A-01/53769
- WO-A-02/06156
- WO-A1-03/068501
- DE-A1- 10 043 793
- DE-C1- 19 803 435
- FR-A- 2 887 489
- GB-A- 2 144 834
- US-A- 4 132 446
- US-A1- 2001 032 540
- US-B1- 7 045 091

## Beschreibung

Die vorliegende Erfindung betrifft eine Panzerungsscheibe in der Form einer Verbundscheibe, insbesondere zur Verwendung als bewegbare Seitenscheibe eines Kraftfahrzeugs.

Eine solche aus Panzerglas bestehende Verbundfensterscheibe für ein Kraftfahrzeug ist aus der DE 198 58 082 C5 bekannt. Die bekannte Sicherheitsscheibe weist mehrere sandwichartig angeordnete Glasscheiben auf, von denen die äußerste Glasscheibe über die anderen Glasscheiben am Rand der Panzerungsscheibe vorragt, um eine Abstufung mit einem Vorsprung an einer Randumfangsseitenfläche der Panzerglasscheibe zum Eingriff in einen Karosserierahmen auszubilden. Ein aus Stahlblech bestehender Rahmen als Panzerelement oder Metallarmierung an der Abstufung verhindert, daß Geschosse, die in einem ungünstigen Winkel am Rand der Panzerungsscheibe auftreffen, den relativ dünnen Glasvorsprung durchschlagen können. Die Fertigung des Stahlrahmens ist jedoch z.B. aufgrund der Schweißstellen an den Ecken des Rahmens aufwändig, um die erforderlichen Toleranzen einzuhalten.

In der EP 1004433B1 ist eine Panzerglasscheibe beschrieben, die als Windschutzscheibe eines Kraftfahrzeugs verwendet werden kann. Die Panzerglasscheibe weist mehrere Glasscheiben im Verbund auf. Aufgrund der großen Flächen von Windschutzscheiben und anderen Panzerungsscheiben haben diese Scheiben bei ausreichend ballistischen Eigenschaften auch ein entsprechen hohes Gewicht und nehmen oftmals auch ein großes Volumen ein, was einen erheblich höheren Kraftstoffverbrauch der Fahrzeuge bewirkt, in denen die bekannten Panzerungsscheiben eingebaut sind, und auch einen entsprechenden konstruktiven Anpassungsaufwand der Karosserie an diese Panzerungsscheiben bedeutet.

US 4,132,446 beschreibt ein herkömmliches, gepanzertes Autofenster.

DE 10043793 A1 beschreibt eine gepanzerte Scheibe mit einem Profilelement entlang eines Rands der Scheibe.

FR 2887 489 A1 offenbart eine laminierte Panzerglasscheibe mit einer Randverstärkung.

In WO 01/53769 A1 ist eine Verbundglasscheibe für Sicherheitskraftfahrzeuge beschrieben, die einen randseitigen Vorsprung hat und die mit einem ersten und mit einem zweiten Schenkel verbunden ist, der aus einem Keramikmaterial bestehen kann.

US 2001/0032540 A1 beschreibt eine Panzerungsscheibe, die mindestens eine optisch transparente, herkömmliche Scheibe aufweist.

In WO 02/06156 A1 ist ein Verfahren zum Herstellen von Aluminiumoxynitrid erläutert, das für optische Fenster und ballistische Panzerungen verwendet werden kann.

DE 19803435 C1 beschreibt einen Sicherheitsaufbau für Sicherheitskraftfahrzeuge, wobei der Sicherheitsaufbau eine eingefügte Randverstärkung und Panzerungsmatten im Inneren des Fahrzeugs aufweist.

GB 2144834 A beschreibt einen durchschußhemmenden Übergang zwischen einer oberen, transparenten Panzerungsplatte und einer unteren, nicht transparenten, herkömmlichen Platte, die aus einem Keramikmaterial und glasfaserverstärktem Plastik bestehen kann.

WO 03/068501 A1 beschreibt einen Panzerglasaufbau mit einem äußeren, beschußseitigen Aufbau aus Glasscheiben mit dazwischen liegenden Verbundschichten und mit einem innenseitigen Aufbau aus Anti Spall Multiply CS Glass Schichten besteht, die eine anorganische Schicht aus AlON aufweisen können.

US 7,045,091 betrifft ein Herstellungsverfahren für transparente Produkte wie einer ballistischen Panzerung aus einem gesinterten AlON.

Die Aufgabe der vorliegenden Erfindung ist es, eine Panzerungsscheibe anzugeben, die ohne ballistische Eigenschaftsverschlechterungen den konstruktiven Mehraufwand z.B. an der Karosserie eines Kraftfahrzeugs vermindert.

Diese Aufgabe wird durch die Panzerungsscheibe gemäß Anspruch 1 gelöst. Demnach hat die Panzerungsscheibe der Erfindung, die insbesondere als eine bewegbare bzw. hochfahrbare oder versenkbare Seitenscheibe eines Kraftfahrzeugs verwendet werden kann, mehrere, schichtweise angeordnete Scheiben und Verbundschichten, wobei mindestens eine Verbundschicht zwischen jeweils zwei aufeinanderfolgenden Scheiben angeordnet ist, um ein ballistisches Scheibenverbundpaket mit einer Randumfangsseite aus den Scheiben und Verbundschichten auszubilden, und eine Abstufung, die an einem Umfangsrand der Panzerungsscheibe ausgebildet ist und einen Vorsprung zum Eingriff der Panzerungsscheibe in einen Kraftfahrzeug-Rahmen oder Türrahmen hat. Mindestens eine der Scheiben des Scheibenverbundpakets der Erfindung besteht aus einem gesinterten AlON. Weiterhin ist bei der Erfindung ein Rahmen vorgesehen, der sich entlang zumindest eines Teils des Umfangsrands der Panzerungsscheibe ununterbrochen erstreckt, wobei der Rahmen an einer Randumfangsseite einer ballistischen Scheibe oder des ballistischen Scheibenverbundpakets angebracht ist, die gesamte Randumfangsseite des Scheibenverbundpakets abdeckt, aus einem gesinterten AlON besteht und einstückig mit dem Vorsprung ausgebildet ist.

Durch die Verwendung einer oder mehrerer AlON-Scheiben bei der Erfindung wird ein erheblich verbessertes Rückhaltevermögen der Panzerungsscheibe gegenüber Beschuss und Schlageinwirkung erreicht. Zudem führen die AlON-Scheiben dazu, dass bei gleichem Panzerungsvermögen der Panzerungsscheibe im Vergleich zu Panzerungsscheiben, die nur Glasscheiben verwenden, die Panzerungsscheiben der Erfindung erheblich dünner ausgelegt werden können und damit auch eine beträchtliche Verminderung des Gewichts und auch des Volumens der Panzerungsscheibe der Erfindung erreicht werden kann.

Bei eine bevorzugten Ausführungsform der Erfindung ist mindestens eine der Scheiben eine AlON-Scheibe, wobei eine erste, äußere Scheibe aus AlON oder eine Glasscheibe ist und eine zweite, zur ersten Scheibe innenliegende Scheibe eine AlON-Scheibe oder eine Glasscheibe ist und wobei eine Verbundschicht zwischen der ersten Scheibe und der zweiten Scheibe aus Polyurethan, Polyvinylbutyral, Ethyleneviylacetat, Polyester, Polyethylene oder Acrylkunststoff bestehen kann. Die Verwendung dieser Kunststoffe hat überraschenderweise gezeigt, dass die Lichtdurchlässigkeit der beteiligten AlON-Scheibe(n) wider Erwarten verbessert wird. Dies wird darauf zurückgeführt, dass die Poren bzw. Fehlstellen an der Oberfläche der AlON-Scheibe, die ansonsten die Lichtdurchlässigkeit durch Lichtstreuung verschlechtern würden, durch den aufgetragenen Kunststoff bzw. die Verbundschicht vermutlich gefüllt werden, wodurch die Streuung erheblich vermindert wird.

Durch die Abstufung, die an dem Umfangsrand der Panzerungsscheibe ausgebildet ist, wird ein Vorsprung zum Eingriff der Panzerungsscheibe in einem Rahmen oder Türrahmen erzeugt, damit die Panzerungsscheibe sicher in einem Aufnahmeschlitz gehalten werden kann.

Eine äußere, erste Scheibe der Panzerungsscheibe kann eine AlON-Scheibe sein, die einstückig mit dem Vorsprung ausgebildet ist, wodurch das Panzerungsvermögen der Panzerungsscheibe verbessert werden kann.

Auch kann eine zweite, der ersten Scheibe weiter innenliegend nachfolgende Scheibe aus AlON bestehen und einstückig mit dem Vorsprung ausgebildet sein, um einen stabileren Aufbau der Panzerungsscheibe gegen Abscherung des Vorsprungs zu erreichen.

Zu diesem Zweck kann auch eine dritte, der zweiten Scheibe weiter innenliegend nachfolgende Scheibe der Panzerungsscheibe aus einem gesinterten AlON bestehen und einstückig mit dem Vorsprung ausgebildet sein.

Die Panzerungsscheibe der Erfindung hat einen Rahmen bzw. eine Randverstärkung aus einem gesinterten AlON und kann deshalb mit einem geradezu beliebigen Querschnitt z.B. auch als gebogener mittels der Sinterung mit hoher Genauigkeit hergestellt werden, wodurch auch komplizierte Formen des Rahmens bzw. der Randverstärkung mit guten ballistischen Eigenschaften hergestellt werden können.

Die Panzerungsscheibe hat bevorzugt mindestens eine äußere Scheibe, mindestens eine innere Scheibe und mindestens eine mittlere Scheibe, die zwischen der äußeren Scheibe und der inneren Scheibe angeordnet ist, wobei die äußere Scheibe über die mittlere Scheibe oder über die anderen Scheiben vorragt, um den Vorsprung am Rand bzw. an der Umfangsseite der Panzerungsscheibe auszubilden, wobei die innere Scheibe im Bereich des Vorsprungs gegenüber der mittleren Scheibe vorragt, um die Vertiefung zwischen der inneren Scheibe und der äußeren Scheibe auszubilden. Durch das Eingreifen des Rahmens in die Vertiefung wird einer Abscherung des Vorsprungs und damit einem Nachinnenfallen der Panzerungsscheibe bei Schlageinwirkung von außen vorgebeugt.

Eine mittlere Scheibe des Scheibenpakets der Panzerungsscheibe besteht bevorzugt aus einem transparenten, gesinterten AlON. Durch AlON als Scheibenmaterial werden gute ballistische Eigenschaften zusammen mit einer guten Lichtdurchlässigkeit erreicht.

Wenn die mittlere Scheibe und der Rahmen der Panzerungsscheibe einstückig aus einem transparenten, gesinterten AlON hergestellt sind, kann eine Panzerungsscheibe mit überraschend guten, ballistischen Eigenschaften hergestellt werden.

Die äußere Scheibe und/oder die innere Scheibe der Panzerungsscheibe kann aus Glas oder einer gesinterten, transparenten Keramik, bevorzugt AlON, bestehen.

Der Rahmen oder Teilrahmen der Panzerungsscheibe kann mittels einer Schicht aus Polyurethan, Polyvinylbutyral, Ethylenvinylacetat, Polyester, Polyethylen oder Acrylkunststoff an der randseitigen Umfangsseite der ballistischen Scheibe bzw. des Scheibenpakets angebracht sein, wodurch ein sicherer Verbund erreicht wird.

Bevorzugt kann das Scheibenverbundpaket an seiner Randumfangsseite eine Vertiefung haben und der Panzerungsrahmen kann einen Steg haben, der sich in die Vertiefung hinein erstreckt, um einen ballistisch besonders beständigen Rahmen ausbilden zu können.

Das Scheibenverbundpaket kann mindestens eine äußere, Scheibe, mindestens eine innere Scheibe und mindestens eine mittlere Scheibe haben, die zwischen der äußeren Scheibe und der inneren Scheibe angeordnet ist, wobei die äußere Scheibe und die innere Scheibe über die mittlere Scheibe am Umfangsrand des Scheibenverbundpakets zum Ausbilden einer Vertiefung vorragt. Hierdurch kann die Herstellung der Panzerungsscheibe vereinfacht werden.

Der Rahmen und mindestens eine der Scheiben des Scheibenpakets können einstückig ausgebildet werden, um die Stabilität der Panzerungsscheibe zu verbessern.

Eine Innenfläche der Panzerungsscheibe der Erfindung kann mit einer Schicht aus Polycarbonat versehen sein. Oder ihre Innenfläche kann mit einer Schichtenfolge aus Polyurethan und Polycarbonat versehen sein. Hierdurch wird ein Einsplittern in den Fahrzeuginnenraum verhindert.

Die Panzerungsscheibe der Erfindung kann eine Heizschicht bzw. Heizeinrichtung aufweisen. Die Panzerungsscheibe der Erfindung kann eine Schicht enthalten, die äußere Infrarotstrahlung reflektiert. Die Panzerungsscheibe der Erfindung kann eine farbige, transparente Glasscheibe oder AlON-Scheibe enthalten. Die Panzerungsscheibe der Erfindung kann einen opaken Abschnitt oder eine opake Schicht enthalten.

Die Panzerungsscheibe der Erfindung kann allgemein in einem Fahrzeug, z.B. in einem Schiff, einem Flugzeug, einem Automobil, verwendet werden. Weiterhin kann die Panzerungsscheibe der Erfindung in einem Gebäude oder in einer Fassade eingesetzt werden. Weiterhin kann die Panzerungsscheibe der Erfindung einen gekrümmten oder gebogenen Querschnitt haben. Weitere vorteilhafte Weiterbildungen der vorliegenden Erfindung sind den Unteransprüchen zu entnehmen.

Weitere Vorteile, vorteilhafte Weiterbildungen und Anwendungsmöglichkeiten der vorliegenden Erfindung sind aus der nachfolgenden Beschreibung von beispielhaften und bevorzugten Ausführungsformen der Erfindung in Verbindung mit den Zeichnungen ersichtlich. Es zeigen:
- Fig. 1A: eine Teilquerschnittsansicht einer Panzerungsscheibe, die keine Ausführungsform gemäß Anspruch 1 der Erfindung ist, entlang der Schnittlinie 2-2 von Fig. 1B mit einem mit gestrichelter Linie angedeuteten Fahrzeugrahmen;
- Fig. 1B: eine Ansicht der Panzerungsscheibe von Fig. 1A;
- Fig. 2: eine Teilquerschnittsansicht einer weiteren Panzerungsscheibe, die keine Ausführungsform gemäß Anspruch 1 der Erfindung ist,;
- Fig. 3: eine Teilquerschnittsansicht einer Panzerungsscheibe, die auch keine Ausführungsform gemäß Anspruch 1 der Erfindung ist;
- Fig. 4: eine Teilquerschnittsansicht einer Ausführungsform der Panzerungsscheibe der vorliegenden Erfindung; und
- Fig. 5: eine Teilquerschnittsansicht einer weiteren Ausführungsform der Panzerungsscheibe der vorliegenden Erfindung.

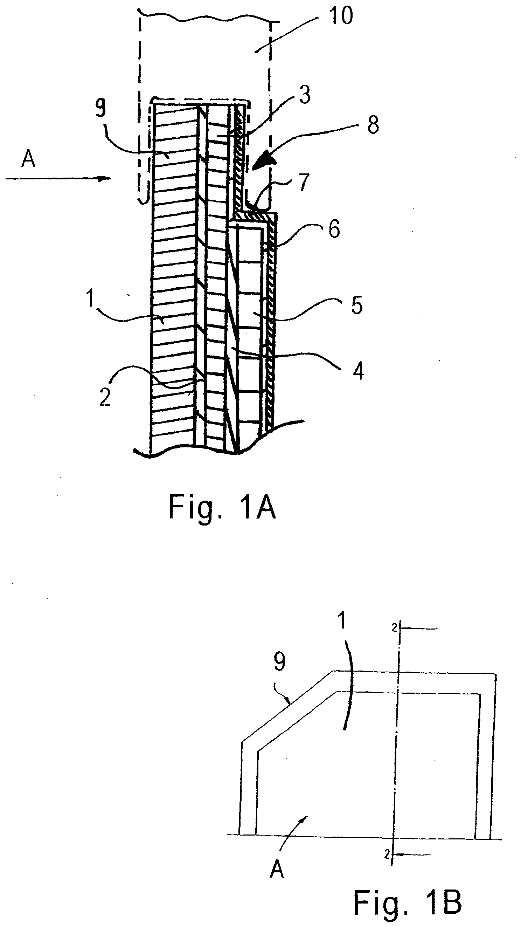

In Fig. 1 ist beispielhaft eine Panzerungsscheibe gezeigt, die als transparente Verbundsicherheitsscheibe ausgebildet ist und mehrere Glasscheiben 1 und 5, eine Scheibe aus Aluminiumoxynitrid (nachfolgend als AlON-Scheibe bezeichnet) und mehrere Verbundschichten 2, 4 und 6 aufweist. Nachfolgend wird die in Fig. 1 gezeigte Panzerungsscheibe im Detail unter beispielhafter Bezugnahme auf die Verwendung als bewegbare, d.h. versenkbare und ausfahrbare, Seitenscheibe eines Kraftfahrzeugs erläutert. Als AlON wird allgemein bevorzugt Al_{(64+x)/3}O₃₂₋ₓNₓ verwendet, wobei bevorzugt x in einem Bereich von 2 < x < 5 ist.

Die Panzerungsscheibe gemäß Fig. 1 umfasst die zwei im Verbund laminatartig angeordnete Glasscheiben 1 und 5, wobei die dritte, innere Glasscheibe 5 fahrzeuginnenseitig und die erste, äußere Glasscheibe 1 fahrzeugau-βenseitig angeordnet ist, von wo gegebenenfalls ein Beschuss oder ein Angriff erfolgen würde. Die zweite, mittlere Scheibe 3, die zwischen der äußeren Glasscheibe 1 und der inneren Glasscheibe 5 angeordnet ist, ist eine AlON-Scheibe aus einem gesinterten AlON als Keramikmaterial. Die Außenseite des Fahrzeugs ist durch den Pfeil A in der Figur 1 verdeutlicht, der auf die äußere Glasscheibe 1 zeigt. Zwischen der äußeren Glasscheibe 1 und der mittleren AlON-Scheibe 3 erstreckt sich eine Polyurethanschicht 2, die einen Verbund zwischen der äußeren Glasscheibe 1 und der mittleren AlON-Scheibe 3 ausbildet. Die Polyurethanschicht 2 bzw. Polyurethanfolie ist umriß- und flächendeckungsgleich zur äußeren Glasscheibe 1. Zwischen der mittleren AlON-Scheibe 3 und der inneren Glasscheibe 5 ist z.B. eine weitere Polyurethanschicht 4 ausgebildet, die wiederum einen festen Verbund zwischen diesen anliegenden Scheiben herstellt. Die Polyurethanschicht 4 ist zumindest flächenmäßig deckungsgleich zur an ihr anstoßenden Oberfläche der inneren Glasscheibe 5.

Die äußere Glasscheibe 1 und die AlON-Scheibe 5 ragen über die innere Glasscheibe 5 zusammen mit der dazwischen angeordneten Polyurethanschicht 2 am Rand oder Umfangsrand der gezeigten Panzerungsscheibe vor, wodurch randseitig ein Vorsprung 9 ausgebildet wird, der über eine Abstufung 8 oder Stufe zu der inneren Glasscheibe 5 hin abfällt.

Der Vorsprung 9 ist in einem Rahmen 10 des Kraftfahrzeugs gehaltert, der in Fig. 1 gestrichelt im Querschnitt angedeutet ist und im Dachbereich des Kraftfahrzeugs verläuft. In der in Fig. 1 gezeigten Stellung greift die Panzerungsscheibe in den Rahmen 14 mit dem Vorsprung 9 ein. Die gezeigt, gepanzerte, kugelsichere und bewegbare Seitenscheibe ist somit in der hochgefahrenen Stellung in Fig. 1 gezeigt und das Fenster ist geschlossen.

Bei einer beispielhaften Panzerungsscheibe beträgt die Dicke der äußeren Glasscheibe 3 mm, die Dicke der AlON-Scheibe 3 und der inneren Glasscheibe 5 jeweils 2 mm. Die Dicken der Polyurethanschichten betragen jeweils 1 mm.

Auf der gesamten Innenfläche der Panzerungsscheibe ist noch eine Schichtenfolge aus einer Polyurethanschicht 6 und einer Polycarbonatschicht 7 in dieser Reihenfolge ganzflächig aufgetragen, wobei die Dicke dieser zusätzlichen Polyurethanschicht etwa 1 mm und die Dicke der Polycarbonatschicht etwa 1 mm beträgt.

Bei der Herstellung der in Fig. 1 gezeigten Panzerungsscheibe wird zunächst die AlON-Scheibe als AlON-Teil aus pulverförmigen Ausgangsmaterialien mit den nachfolgenden Verfahrensschritten A bis E hergestellt.

Genauer wird ein im Wesentlichen homogenes Pulver aus Aluminiumoxynitrid (AlON) verwendet, um die transparente, gesinterte AlON-Scheibe bzw. das AlON-Teil herzustellen. Das AlON-Pulver wird in einem Schritt A aus einer Mischung aus 25 bis 45 Mol-% Aluminiumnitrid in der Form von im Handel erhältlichem Feinteilchenpulver hoher Reinheit und aus 75 bis 55 Mol-% Aluminiumoxid wieder in der Form eines im Handel erhältlichen Feinteilchenpulvers hoher Reinheit erzeugt, wobei die Teilchengrößen der Pulver z.B. kleiner als 75 Mikrometer sind.

Diese Mischung wird z.B. in einer Kugelmühle für z.B. 17 Stunden unter Zusatz eines Aluminiumschleifmittels und Methanol in einem Schritt B gemahlen. Dann wird die Mischung in einem Schmelztiegel bei etwa 1600 °C - 1750 °C in einer Stickstoffatmosphäre in einem Verfahrensschritt C kalziniert, um ein Pulver aus kubischem Aluminiumoxynitrid zu erhalten, das dann wieder z.B. in einer Kugelmühle unter Zugabe von Aluminiumschleifmittel und Methanol gemahlen wird. Das dabei entstehende AlON-Pulver hat eine durchschnittliche Teilchengröße von kleiner 20 Mikrometer, bevorzugt von jedoch kleiner 1 Mikrometer.

In einem Schritt D wird das AlON-Pulver dann nach einem Trocknungsschritt in einer entsprechend der Scheibengröße der zu erzeugenden AlON-Scheibe ausgelegten Form bzw. in einer entsprechend dem AlON-Teil ausgelegten Form bei einem Druck von etwa 17000 psi isostatisch gepresst, um eine AlON-Rohscheibe als ein geformtes AlON-Rohteil zu erhalten.

In einem Sinterungsschritt E wird diese AlON-Rohscheibe bzw. das AlON-Rohteil dann in einem Sinterofen in einer Stickstoffatmosphäre gesintert, wobei eine Sintertemperatur und eine Zeitdauer des Sinterns derart eingestellt werden, dass eine Porosität oder Leerstellen der AlON-Scheibe bzw. des AlON-Teils und gleichzeitig ein zu starkes Kornwachstum vermieden werden, um eine hohe Transparenz der hergestellten AlON-Scheibe 3 bzw. des hergestellten AlON-Teils sicherstellen zu können. Die Sintertemperatur kann zwischen 1800 °C und 2000 °C betragen und dauert zwischen 15 und 110 Stunden. Dem Sinterungsschritt kann noch ein Evakuierungsschritt vorgeschaltet sein, um im wesentlichen Luft aus dem Sinterofen zu entfernen. Weiterhin können beim Sintern noch Dotierungsstoffe, z.B. Yttrium oder Y₂O₃, in geringen Mengen zugesetzt werden, um die Porosität der erzeugten AlON-Scheibe bzw. des erzeugten AlON-Teils weiter abzusenken. Nach dem Sinterschritt lässt man die hergestellt AlON-Scheibe 3 bzw. das hergestellte AlON-Teil auf eine relativ niedrige Temperatur oder Umgebungstemperatur abkühlen.

Optional kann dann noch ein Polieren und/oder Schleifen der AlON-Scheibe bzw. des AlON-Teils durchgeführt werden, um die Lichtdurchlässigkeit der AlON-Scheibe weiter verbessern zu können.

Bei der weiteren Herstellung der Panzerungsscheibe wird auf die bereits hergestellte, äußere Glasscheibe 1 eine Polyurethanfolie mit einer Stärke von 1 mm - aus einem typischen Bereich für die Folienstärke zwischen ungefähr 0,3 mm bis 5 mm - manuell, halbautomatisch oder vollautomatisch flächendeckend auf die zugewandte Oberfläche der äußeren Glasscheibe 1 aufgelegt und ausgerichtet, so daß die aufgelegte Polyurethanfolie die gesamte innenseitige Oberfläche der Glasscheibe 1 abdeckt. Anschließend wird die AlON-Scheibe 3 auf die Polyurethanschicht 2 aufgelegt und auf diese wieder eine Polyurethanfolie als Polyurethanschicht 4 aufgelegt. Die Scheiben 1 und 3 und die Verbundschichten 2 und 4 werden dann derart ausgerichtet, dass sie am Rand die äußere Glasscheibe 1, die Polyurethanschicht 2 und die AlON-Scheibe 3 im Randbereich bündig zu einander sind.

Anschließend wird auf die Polyurethanschicht 4 die Glasscheibe 5 derart aufgelegt, dass die zu fertigende Panzerglasscheibe eine gleichmäßig am Rand umlaufende Abstufung 8 mit dem Vorsprung 9 erhält.

Aus der so präparierten Verbundstruktur wird anschließend unter Erwärmung und Verpressung in einem sogenannten Vorverbundofen ein Vorverbund mit partiell plastifizierten Folien hergestellt. Bei der Vorbehandlung wird die eingeschlossene Luft aus der laminatartige Verbundstruktur fast vollständig herausgepreßt.

Anschließend wird die so vorbehandelte Verbundstruktur in einen Autoklaven verbracht. In diesem Autoklaven werden bei einem genau definierten Druck- und Temperaturzyklus die Einzelkomponenten der vorbehandelten Sandwichstruktur miteinander verbunden. Während des Autoklavenzyklus wird zunächst unter einem hohen Druck von 12 bis 15 bar, bevorzugt bei 14 bar, das Autoklaveninnere auf eine Temperatur zwischen 120° und 150°C, bevorzugt 130°C, aufgeheizt. Sind die Sollwerte für Druck und Temperatur erreicht, so werden sie über eine Haltezeit im Autoklaven aufrecht erhalten. Anschließend werden dann zunächst die Temperatur und dann der Druck im Autoklaven abgesenkt und die so behandelte Verbundstruktur wird entnommen.

Auf die Innenfläche der so behandelten Verbundstruktur werden dann eine weitere Polyurethanfolie als Polyurethanschicht 6 und darauf in dieser Reihenfolge die Polykarbonatschicht 7 aufgelegt. Die so präparierte Verbundstruktur wird dann wieder in dem Vorverbundofen wie vorstehend behandelt, um die Luft aus der Verbundstruktur zu entfernen. Anschließend wird die so vorbehandelte Verbundstruktur in einen Autoklaven verbracht. In diesem Autoklaven werden bei einem genau definierten Druck- und Temperaturzyklus die Einzelkomponenten der nun vorliegenden, vorbehandelten Sandwichstruktur miteinander verbunden, wobei im wesentlichen der zuvor erläuterte Autoklavenzyklus angewandt wird.

In einer Modifikation der ersten Ausführungsform der Panzerungsscheibe nach Fig. 1 kann die äußere Glasscheibe 1 und/oder die innere Glasscheibe 5 durch eine weitere AlON-Scheibe ersetzt sein. In einer weiteren Modifikation kann z.B. je nach Anwendungsfall und gewünschten ballistischen Rückhalteeigenschaften die innere Glasscheibe 5 weggelassen werden, so dass auch die Abstufung 8 entfällt. Die äußere Glasscheibe 1 kann dann z.B. durch eine dünnere AlON-Scheibe bei gleichbleibenden ballistischen Eigenschaften ersetzt werden.

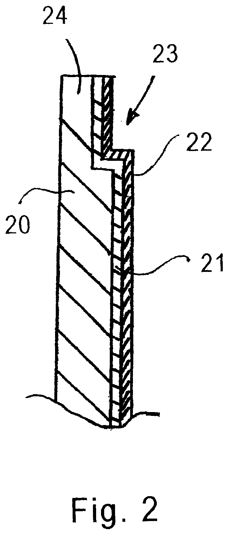

In Fig. 2 ist beispielhaft eine Panzerungsscheibe gezeigt, die wieder als Verbundsicherheitsscheibe ausgebildet ist und im wesentlichen eine Scheibe aus Aluminiumoxynitrid (nachfolgend als AlON-Scheibe bezeichnet) aufweist und als bewegbare, d.h. versenkbare und ausfahrbare, Seitenscheibe eines Kraftfahrzeugs verwendet werden kann.

Die Panzerungsscheibe gemäß Fig. 2 hat die im Verbund laminatartig angeordnete, einstückige AlON-Scheibe 20, die aus einem gesinterten AlON als Keramikmaterial besteht. Die AlON-Scheibe 20 hat an ihrem Rand oder Umfangsrand einen Vorsprung 24, der eine geringere Dicke als ein Mittenbereich der AlON-Scheibe 20 hat. Der Vorsprung 24 dient wieder dazu, dass die bewegbare Panzerungsscheibe in einen Aufnahmespalt eines Karosserierahmens eines Automobils einfahren kann.

Auf der gesamten Innenfläche der Panzerungsscheibe von Fig. 2 ist eine Schichtenfolge aus einer Polyurethanschicht 21 und einer Polycarbonatschicht 22 in dieser Reihenfolge ganzflächig aufgetragen. Die Dicke dieser Polyurethanschicht 21 kann z.B. ca. 1 mm und die Dicke der Polycarbonatschicht 22 kann ca. 1 mm betragen. Die Dicke der AlON-Scheibe 20 kann an ihrem Vorsprung 3 mm und ansonsten 5 mm betragen.

Bei der Herstellung der in Fig. 2 gezeigten Panzerungsscheibe wird zunächst die AlON-Scheibe 20 aus pulverförmigen Ausgangsmaterialien wieder mit den vorstehend bezüglich der Panzerungsscheibe gemäß Fig. 1 erläuterten Verfahrensschritten A bis E hergestellt, mit dem Unterschied, dass im Pressschritt D eine speziell an die AlON-Scheibe 20 mit Vorsprung 24 angepasste Form verwendet wird.

Bei der weiteren Herstellung der Panzerungsscheibe von Fig. 2 wird auf die Innenfläche der bereits hergestellte AlON-Scheibe 20 eine Polyurethanfolie 21 mit einer Stärke von 1 mm - aus einem typischen Bereich für die Folienstärke zwischen ungefähr 0,3 mm bis 5 mm - manuell, halbautomatisch oder vollautomatisch flächendeckend aufgelegt und ausgerichtet, so daß die aufgelegte Polyurethanfolie die gesamte Innenfläche der AlON-Scheibe 20 abdeckt. Anschließend wird die eine zugeschnittene Polykarbonatfolie als Polykarbonatschicht 22 auf die freiliegende Fläche der Polyurethanschicht 21 aufgelegt.

Aus der so präparierten Verbundstruktur wird anschließend unter Erwärmung und Verpressung in dem Vorverbundofen ein Vorverbund mit partiell plastifizierten Folien hergestellt. Bei der Vorbehandlung wird die eingeschlossene Luft aus der laminatartige Verbundstruktur fast vollständig herausgepresst.

Anschließend wird die so vorbehandelte Verbundstruktur in den Autoklaven verbracht. In diesem Autoklaven werden bei einem genau definierten Druck- und Temperaturzyklus die Einzelkomponenten der vorbehandelten Sandwichstruktur miteinander verbunden. Während des Autoklavenzyklus wird zunächst unter einem hohen Druck von 12 bis 15 bar, bevorzugt bei 14 bar, das Autoklaveninnere auf eine Temperatur zwischen 120° und 150°C, bevorzugt 130°C, aufgeheizt. Sind die Sollwerte für Druck und Temperatur erreicht, so werden sie über eine Haltezeit im Autoklaven aufrecht erhalten. Anschließend wird dann zunächst die Temperatur und dann der Druck im Autoklaven abgesenkt und die so behandelte Verbundstruktur wird entnommen, die nun der fertiggestellten Panzerungsscheibe gemäß Fig. 2 entspricht. Die freiliegende Außenfläche der AlON-Scheibe 20 bzw. der Panzerungsscheibe der Erfindung kann dann noch poliert bzw. geschliffen werden, um ihre Lichtdurchlässigkeit weiter zu verbessern.

Eine Modifikation der in Fig. 2 gezeigten Panzerungsscheibe ist ohne randseitigen Vorsprung 24 ausgebildet, d.h., dass die Modifikation eine AlON-Scheibe mit gleichbleibender Dicke enthält.

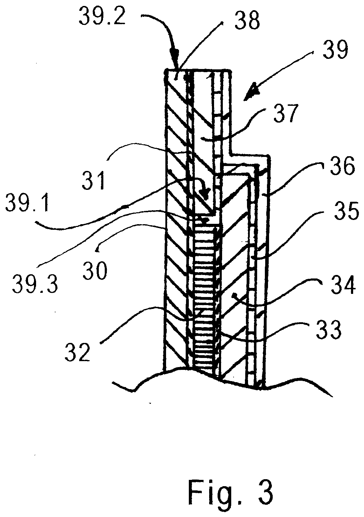

In Fig. 3 ist beispielhaft eine weitere Panzerungsscheibe gezeigt, die als transparente Verbundsicherheitsscheibe mit mehreren Glasscheiben 30, 32 und 34 und mehreren Verbundschichten 31, 33 und 35 ausgebildet ist und beispielsweise als bewegbare Seitenscheibe eines Kraftfahrzeugs verwendet werden kann.

Dabei ist die dritte, innere Glasscheibe 34 fahrzeuginnenseitig und die erste, äußere Glasscheibe 30 fahrzeugaußenseitig angeordnet, von wo gegebenenfalls ein Beschuss oder ein Angriff erfolgen würde. Die zweite, mittlere Scheibe 32 ist zwischen der äußeren Glasscheibe 30 und der inneren Glasscheibe 34 angeordnet. Zwischen der äußeren Glasscheibe 30 und der mittleren Glasscheibe 32 erstreckt sich eine Polyurethanschicht 31 als Verbundschicht, die einen Verbund zwischen der äußeren Glasscheibe 30 und der mittleren Glasscheibe 32 ausbildet. Die Polyurethanschicht 31 bzw. Polyurethanfolie ist umriss- und flächendeckungsgleich zur äußeren Glasscheibe 30. Zwischen der mittleren Glasscheibe 32 und der inneren Glasscheibe 34 ist z.B. eine weiter Polyurethanschicht 33 als Verbundschicht ausgebildet, die wiederum einen festen Verbund zwischen diesen an ihr anliegenden Glasscheiben 32 und 34 herstellt. Die Polyurethanschicht 33 ist zumindest flächenmäßig deckungsgleich zur an ihr anstoßenden Oberfläche der inneren Glasscheibe 34.

Die äußere Glasscheibe 30 und die innere Glasscheibe 34 ragen über die mittlere Glasscheibe 32 am Rand oder Umfangsrand der gezeigten Panzerungsscheibe von Fig. 3 vor, wodurch randseitig eine Vertiefung 39.1 ausgebildet ist. Zudem ragt die äußere Glasscheibe 30 über die mittlere Glasscheibe 32 und die innere Glasscheibe 34 am Rand oder Umfangsrand der gezeigten Panzerungsscheibe von Fig. 3 vor, wodurch randseitig ein Vorsprung 38 ausgebildet ist, der über eine Abstufung 39 zu der inneren Glasscheibe 34 hin abfällt. Im Bereich des Vorsprungs 38 ist die Panzerungsscheibe von Fig. 3 somit dünner als sonst. Der Vorsprung 38 dient zum Eingreifen in einen Karosserierahmen.

Auf der im Bereich des Vorsprungs 38 nach innen weisenden Oberfläche 10 der Polyurethanschicht 21 ist eine gesinterte Verstärkung 37 aus AlON angebracht, die als ein am Rand der Panzerungsscheibe angeordneter, einstückiger, z.B. dreischenkliger oder mehrschenkliger Rahmen ausgebildet sein kann und mit der äußeren Glasscheibe 30 mittels der Polyurethanschicht 31 einen festen Verbund bildet. An einer Umfangsstirnseite 39.2 der Panzerungsscheibe sind die äußere Glasscheibe 30, die Polyurethanschicht 31 und die AlON-Verstärkung 37 bündig zueinander. Die AlON-Verstärkung 37 hat einen rechteckigen Querschnitt.

Die AlON-Verstärkung 37 erstreckt sich in die Vertiefung 39.1 bzw. Nut hinein und stößt in etwa stumpf an die Stirnseite der mittleren Glasscheibe 32 an. Stirnseitig ist die innere Glasscheibe 34 mit einer Versiegelung 39.3, z.B. aus Polyurethan, versehen, die zudem Hohlräume innerhalb der Vertiefung 39.1 zwischen den angrenzenden Oberflächen der AlON-Verstärkung 37, der mittleren Glasscheibe 32, der Polyurethanschicht 31 und der Polyurethanschicht 35 innerhalb der Vertiefung 39.1 ausfüllt bzw. versiegelt.

Einer Abscherung des Vorsprungs 38 am Übergangsbereich zwischen der AlON-Verstärkung 37 und der mittleren Glasscheibe 32 ist durch die überlappende Ausbildung der inneren Glasscheibe 34 bezüglich der ihr zugewandten Oberfläche der AlON-Verstärkung 37 vorgebeugt.

Bei einer beispielhaften Panzerungsscheibe beträgt die Dicke der äußeren Glasscheibe 3 mm, die Dicke der AlON-Verstärkung 37 und der mittleren Glasscheibe 32 jeweils 3 mm. Die Dicken der Polyurethanschichten 31 und 33 und 35 betragen jeweils 1 mm.

Auf der gesamten Innenfläche der Panzerungsscheibe ist noch eine Schichtenfolge aus einer Polyurethanschicht 35 und einer Polycarbonatschicht 36 in dieser Reihenfolge ganzflächig aufgetragen, wobei die Dicken dieser Schichten jeweils 1 mm betragen können.

Bei der Herstellung der in Fig. 3 gezeigten Panzerungsscheibe wird zunächst die AlON-Verstärkung 37 als geschlossener, dreischenkliger oder umlaufender, d.h. vierschenkliger, AlON-Rahmen aus pulverförmigen Ausgangsmaterialien mit den Verfahrensschritten A bis E als AlON-Teil bzw. AlON-Rohteil hergestellt, wobei die Verfahrensschritte im Zusammenhang mit der Panzerungsscheibe von Fig. 1 vorstehend erläutert worden sind.

Bei der Herstellung der in Fig. 3 gezeigten Panzerungsscheibe werden die äußere Glasscheibe 30 und die mittlere Glasscheibe 32 zunächst auf einer Transportstrecke gewaschen und getrocknet. Anschließend wird eine Sandwichstruktur in einem staubfrei gehaltenen und klimatisierten Raum hergestellt. Dabei wird auf die äußere Glasscheibe 30 eine Polyurethanfolie als Polyurethanschicht 31 mit einer Stärke von 1 mm - aus einem typischen Bereich für die Folienstärke zwischen ungefähr 0,3 mm bis 5 mm - manuell, halbautomatisch oder vollautomatisch flächendeckend auf die innenliegende Oberfläche der äußeren Glasscheibe 30 aufgelegt und ausgerichtet. Anschließend wird die mittlere Glasscheibe 32 auf die Polyurethanschicht 31 derart aufgelegt und ausgerichtet, dass sich im Randbereich der zu fertigenden Panzerungsscheibe eine gleichmäßig umlaufende Abstufung ergibt bzw. die äußere Glasscheibe 30 im Randbereich über die mittlere Glasscheibe 32 hinausragt. Auf die randseitig umlaufende freiliegende Oberfläche der Polyurethanschicht 31 wird nun die bereits hergestellte AlON-Verstärkung 37 mit rechteckigem Querschnitt aufgelegt, wobei die Breite der AlON-Verstärkung 37 der Breite der rahmenartig freiliegenden Polyurethanschicht 31 entspricht und diese durch die AlON-Verstärkung 37 abgedeckt wird.

Zwischen den stumpf benachbarten Stirnseiten der mittleren Glasscheibe 32 und der AlON-Randverstärkung 37 wird ein dünner Streifen aus Polyurethanfolie eingelegt, der später einen Teil der Versiegelung 39.3 bildet. Der dünne Polyurethanstreifen hat die Funktion Fertigungstoleranzen oder Bewegungen zwischen der AlON-Verstärkung 37 und der angrenzenden bzw. benachbarten Glasscheibe 32 auszugleichen bzw. aufzunehmen.

Aus der so präparierten Sandwichstruktur wird anschließend unter Erwärmung und Verpressung in dem Vorverbundofen ein Vorverbund mit partiell plastifizierten Folien hergestellt, wobei die Lage der AlON-Verstärkung 37 durch entsprechende Abstandshalter eingehalten wird. Bei der Vorbehandlung wird die eingeschlossene Luft aus der Sandwichstruktur möglichst vollständig herausgepresst.

Anschließend wird die so vorbehandelte Sandwichstruktur in den Autoklaven verbracht. In dem Autoklaven werden bei einem genau definierten Druck- und Temperaturzyklus die Einzelkomponenten der vorbehandelten Sandwichstruktur miteinander verbunden. Der Autoklavenzyklus wird vorstehend mit Bezug auf die Panzerungsscheibe von Fig. 1 erläutert. Nach der Beendigung des Autoklavenzyklus wird die Sandwichstruktur entnommen.

In einem nächsten Schritt wird auf die nun freiliegende Oberfläche der mittleren Glasscheibe 32 eine Polyurethanfolie als Polyurethanschicht 33 flächendeckend aufgelegt und ausgerichtet. Auf dieses ausgerichtete Polyurethanfolie wird anschließend die innere, zuvor gereinigte Glasscheibe 34 aufgelegt und derart ausgerichtet, dass die innere Glasscheibe 34 über die Stirnseite der mittleren Glasscheibe 32 vorragt und die AlON-Verstärkung 37 teilweise überlappt, wie in Fig. 3 ersichtlich ist. Da die innere Glasscheibe 34 stirnseitig über die mittlere Glasscheibe 32 vorragt, wird somit zwischen der äußeren Glasscheibe 30 und der inneren Glasscheibe 34 eine Vertiefung 39.1 ausgebildet, in die sich die AlON-Verstärkung 37 hinein erstreckt. Anschließend wird noch ein Winkel aus Polyurethanfolie auf die Stirnseite der inneren Glasscheibe 34 aufgesetzt, wobei ein Schenkel des Winkels in die Vertiefung 39.1 eingreift und der andere Schenkel die Stirnseite der inneren Glasscheibe 34 vollständig abdeckt. Der gewinkelte Polyurethanstreifen versiegelt nach Fertigstellung der Panzerungsscheibe Zwischenräume innerhalb der Vertiefung 39.1. und bildet somit einen Teil der Versiegelung 39.3.

Die so präparierte Sandwichstruktur wird nun wieder in den Vorverbundofen unter Erwärmung und Verpressung behandelt, um Luft in und im Bereich der Polyurethanschicht 33 und der Versiegelung 39.3 möglichst vollständig auszupressen und eine partielle Plastifizierung der Polyurethanfolie der Polyurethanschicht 33 und des Polyurethanmaterials der Versiegelung 39.3 zu erhalten. Die so erhaltene Vorverbund-Scheibe wird anschließend wieder in einem Autoklaven behandelt, wobei wiederum der vorstehend erläuterte Druck- und Temperaturzyklus ausgeführt wird, um eine haltbare und feste Verbindung der gesamten Vorverbundscheibe zu erhalten. Anschließend wird dann die so behandelte Verbundstruktur aus dem Autoklaven wieder entnommen.

Auf die Innenfläche der so behandelten Verbundstruktur werden dann eine weitere Polyurethanfolie als Polyurethanschicht 35 und darauf in dieser Reihenfolge die Polykarbonatschicht 36 aufgelegt. Die so präparierte Verbundstruktur wird dann wieder in dem Vorverbundofen wie vorstehend behandelt, um die Luft aus der Verbundstruktur zu entfernen. Anschließend wird die so vorbehandelte Verbundstruktur in wieder in den Autoklaven verbracht. In diesem Autoklaven werden bei einem genau definierten Druck- und Temperaturzyklus die Einzelkomponenten der nun vorliegenden, vorbehandelten Sandwichstruktur miteinander verbunden, wobei im wesentlichen der zuvor erläuterte Autoklavenzyklus angewandt wird. Danach kann die fertige Panzerungsscheibe aus dem Autoklaven entfernt werden.

In einer Modifikation der Panzerungsscheibe von Fig. 3 können die äußere Glasscheibe 30 und/oder die mittlere Glasscheibe 32 und/oder die innere Glasscheibe durch jeweils eine AlON-Scheibe ersetzt sein. In einer weiteren Modifikation können mehrere Randverstärkungen aus AlON und/oder Metall, z.B. aus Stahl, am Rand der Panzerungsscheibe vorgesehen sein.

In anderen Modifikationen kann eine Panzerungsscheibe mehrere äußere Glasscheiben bzw. AlON-Scheiben und/oder mehrere mittlere Glasscheiben bzw. AlON-Scheiben und/oder mehrere innere Glasscheiben bzw. AlON-Scheiben aufweisen.

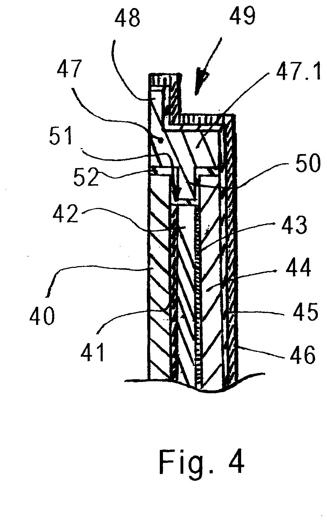

In Fig. 4 ist beispielhaft eine Ausführungsform der Panzerungsscheibe der Erfindung gezeigt, die als transparente Verbundsicherheitsscheibe mit mehreren Glasscheiben 40, 42 und 44 und mehreren Verbundschichten 41, 43 und 45 ausgebildet ist und beispielsweise als bewegbare Seitenscheibe oder als Windschutzscheibe eines Kraftfahrzeugs verwendet werden kann.

Dabei ist die dritte, innere Glasscheibe 44 fahrzeuginnenseitig und die erste, äußere Glasscheibe 40 fahrzeugaußenseitig angeordnet, von wo gegebenenfalls ein Beschuss oder ein Angriff erfolgen würde. Die zweite, mittlere Scheibe 42 ist zwischen der äußeren Glasscheibe 40 und der inneren Glasscheibe 44 angeordnet.

Zwischen der äußeren Glasscheibe 40 und der mittleren Glasscheibe 42 erstreckt sich eine Polyurethanschicht 41 als Verbundschicht, die einen Verbund zwischen der äußeren Glasscheibe 40 und der mittleren Glasscheibe 42 ausbildet. Die Polyurethanschicht 41 bzw. Polyurethanfolie ist umriss- und flächendeckungsgleich zur äußeren Glasscheibe 40. Zwischen der mittleren Glasscheibe 42 und der inneren Glasscheibe 44 ist z.B. eine weiter Polyurethanschicht 43 als Verbundschicht ausgebildet, die wiederum einen festen Verbund zwischen diesen an ihr anliegenden Glasscheiben 42 und 44 herstellt. Die Polyurethanschicht 43 ist zumindest flächenmäßig deckungsgleich zur an ihr anstoßenden Oberfläche der inneren Glasscheibe 44.

Die äußere Glasscheibe 40 und die innere Glasscheibe 44 ragen zueinander bündig über die mittlere Glasscheibe 42 am Rand oder Umfangsrand der gezeigten Panzerungsscheibe von Fig. 4 vor, wodurch randseitig eine Vertiefung 51 ausgebildet ist.

Am Umfangsrand der Panzerungsscheibe von Fig. 4 ist eine gesinterte Verstärkung 47 aus AlON angebracht, die als ein am Rand der Panzerungsscheibe angeordneter, einstückiger, umlaufender oder z.B. dreischenkliger Profilrahmen ausgebildet ist und mit dem Scheibenpaket aus den Glasscheiben 40, 42 und 44 mittels einer Verbundschicht 52 einen festen Verbund ausbildet. Die AlON-Verstärkung 47 hat einen umlaufenden Hauptabschnitt 47.1 mit einem rechteckigen Querschnitt, einen ebenso umlaufenden Vorsprung 48 der randseitig am Umfang der Panzerungsscheibe radial absteht, und einen umlaufenden Steg 50, der von dem Hauptabschnitt 47.1 in die Vertiefung 51. zwischen der inneren Glasscheibe 44 und der äußeren Glasscheibe 44 des Scheibenpakets der Panzerungsscheibe von Fig. 4 hineinsteht.

Im Bereich des Vorsprungs 48 ist die Panzerungsscheibe von Fig. 4 somit dünner als sonst. Der Vorsprung 48 dient zum Eingreifen in einen Karosserierahmen.

Einer Abscherung der AlON-Verstärkung 47 am Übergangsbereich zwischen der AlON-Verstärkung 47 und dem Umfang des Scheibenpakets durch äußere Krafteinwirkung ist durch den Eingriff des Stegs 50 in die Vertiefung 51 vorgebeugt.

Bei einer beispielhaften Panzerungsscheibe der Erfindung beträgt die Dicke der äußeren Glasscheibe 3 mm und die Dicke des Vorsprungs 48 der AlON-Verstärkung 47 etwa 5 mm. Die mittlere Glasscheibe 42 und die innere Glasscheibe 44 sind jeweils 3 mm dick. Die Dicken der Polyurethanschichten 41, 43 und 45 betragen jeweils z.B. 1 mm. Die Verbundschicht 52 besteht aus Polyurethan und hat eine Dicke von etwa 0,5 mm.

Auf der gesamten Innenfläche der Panzerungsscheibe ist noch eine Schichtenfolge aus einer Polyurethanschicht 45 und einer Polycarbonatschicht 46 in dieser Reihenfolge ganzflächig aufgetragen, wobei die Dicken dieser Schichten jeweils 1 mm betragen können.

Bei der Herstellung der in Fig. 4 gezeigten Panzerungsscheibe wird zunächst die AlON-Verstärkung 47 als geschlossener, dreischenkliger oder umlaufender, d.h. vierschenkliger, AlON-Rahmen aus pulverförmigen Ausgangsmaterialien mit den Verfahrensschritten A bis E als AlON-Teil bzw. AlON-Rohteil hergestellt, wobei die Verfahrensschritte im Zusammenhang mit der Panzerungsscheibe von Fig. 1 bereits vorstehend ausführlich erläutert worden sind.

Bei der Herstellung der in Fig. 4 gezeigten erfindungsgemäßen Panzerungsscheibe werden die äußere Glasscheibe 40 und die mittlere Glasscheibe 42 zunächst auf einer Transportstrecke gewaschen und getrocknet. Anschließend wird eine Sandwichstruktur in einem staubfrei gehaltenen und klimatisierten Raum hergestellt. Dabei wird auf die äußere Glasscheibe 40 eine Polyurethanfolie als Polyurethanschicht 41 mit einer Stärke von 1 mm - aus einem typischen Bereich für die Folienstärke zwischen ungefähr 0,3 mm bis 5 mm - manuell, halbautomatisch oder vollautomatisch flächendeckend auf die innenliegende Oberfläche der äußeren Glasscheibe 40 aufgelegt und ausgerichtet. Anschließend wird die mittlere Glasscheibe 42 auf die Polyurethanschicht 41 derart aufgelegt und ausgerichtet, dass sich eine gleichmäßig umlaufende Stufe ergibt bzw. die äußere Glasscheibe 40 randseitig über die mittlere Glasscheibe 42 hinausragt.

Aus der so präparierten Sandwichstruktur wird anschließend unter Erwärmung und Verpressung in dem Vorverbundofen ein Vorverbund mit partiell plastifizierten Folien hergestellt. Bei der Vorbehandlung wird die eingeschlossene Luft aus der Sandwichstruktur möglichst vollständig herausgepresst.

Anschließend wird die so vorbehandelte Sandwichstruktur in den Autoklaven verbracht. In dem Autoklaven werden bei einem genau definierten Druck- und Temperaturzyklus die Einzelkomponenten der vorbehandelten Sandwichstruktur miteinander verbunden. Der Autoklavenzyklus wird vorstehend mit Bezug auf die Panzerungsscheibe von Fig. 1 erläutert. Nach der Beendigung des Autoklavenzyklus wird die Sandwichstruktur entnommen.

In einem nächsten Schritt wird auf die nun auf die freiliegende Oberfläche der mittleren Glasscheibe 42 eine Polyurethanfolie als Polyurethanschicht 43 flächendeckend aufgelegt und ausgerichtet. Auf dieses ausgerichtete Polyurethanfolie wird anschließend die innere, zuvor gereinigte Glasscheibe 44 aufgelegt und derart ausgerichtet, dass die innere Glasscheibe 44 über die Stirnseite der mittleren Glasscheibe 42 vorragt und zu der äußeren Glasscheibe 40 bündig ist. Da die innere Glasscheibe 44 und die äußere Glasscheibe 40 stirnseitig über die mittlere Glasscheibe 42 bündig vorragen, wird somit zwischen der äußeren Glasscheibe 40 und der inneren Glasscheibe 44 die Vertiefung 51 ausgebildet.

Die so präparierte Sandwichstruktur wird nun wieder in den Vorverbundofen unter Erwärmung und Verpressung behandelt, um Luft möglichst vollständig auszupressen und eine partielle Plastifizierung der Polyurethanfolie der Polyurethanschicht 43 zu erhalten. Die so erhaltene Vorverbund-Scheibe wird anschließend wieder in einem Autoklaven behandelt, wobei wiederum der vorstehend erläuterte Druck- und Temperaturzyklus ausgeführt wird, um eine haltbare und feste Verbindung der gesamten Vorverbundscheibe zu erhalten. Anschließend wird dann die so behandelte Verbundstruktur aus dem Autoklaven wieder entnommen.

Auf die Umfangsfläche der so behandelten Verbundstruktur werden dann mehrere streifenförmige Polyurethanfolien aufgelegt, die die Verbundschicht 52 ausbilden. Auf die Verbundschicht 52 wird dann die AlON-Randverstärkung 47 aufgesetzt, deren Außenseite bündig zu der freiliegenden Außenfläche der äußeren Glasscheibe 40 ist und deren Innenseite ohne Vorsprung bündig zu der nach innen weisenden Fläche der inneren Glasscheibe 44 ist. Die so präparierte Verbundstruktur wird dann wieder in dem Vorverbundofen wie vorstehend behandelt, um die Luft aus der Verbundstruktur zu entfernen. Anschließend wird die so vorbehandelte Verbundstruktur wieder in den Autoklaven verbracht. In dem Autoklaven werden bei dem bereits erwähnten genau definierten Druck- und Temperaturzyklus die Einzelkomponenten der nun vorliegenden, vorbehandelten Sandwichstruktur miteinander verbunden, wobei im wesentlichen der zuvor erläuterte Autoklavenzyklus angewandt wird.

Danach wird auf die Innenfläche der entnommenen Verbundstruktur die Polyurethanschicht 45 und die Polykarbonatschicht 46 in dieser Reihenfolge aufgelegt und wider in dem Vorverbundofen und dem Autoklaven , wie bereits vorstehend erwähnt wurde, behandelt. Danach kann die fertige Panzerungsscheibe gemäß Fig. 4 aus dem Autoklaven entfernt werden.

In der Ausführungsform der Erfindung von Fig. 4 sind die äußere Glasscheibe 40 und/oder die mittlere Glasscheibe 42 und/oder die innere Glasscheibe 44 durch jeweils eine AlON-Scheibe ersetzt.

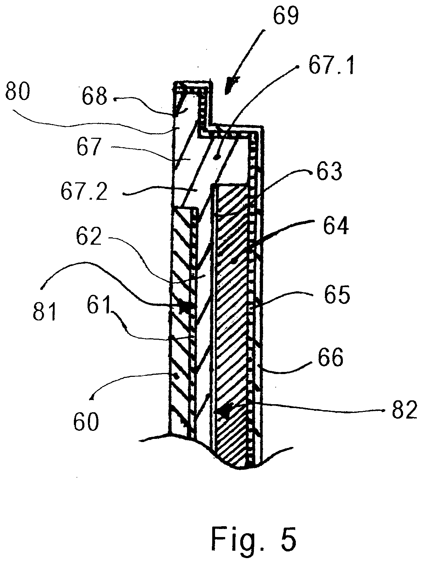

In Fig. 5 ist beispielhaft eine weitere Ausführungsform der Panzerungsscheibe der Erfindung gezeigt, die als Verbundsicherheitsscheibe mit mehreren Glasscheiben 60 und 64, einer gesinterten AlON-Scheibe 62 und mehreren Verbundschichten 61, 63 und 65 ausgebildet ist und beispielsweise als bewegbare Seitenscheibe oder als Windschutzscheibe eines Kraftfahrzeugs verwendet werden kann.

Dabei ist die dritte, innere Glasscheibe 64 fahrzeuginnenseitig und die erste, äußere Glasscheibe 60 fahrzeugaußenseitig angeordnet, von wo gegebenenfalls ein Beschuss oder ein Angriff erfolgen würde. Die zweite, mittlere AlON-Scheibe 62 ist zwischen der äußeren Glasscheibe 60 und der inneren Glasscheibe 64 angeordnet.

Zwischen der äußeren Glasscheibe 60 und der mittleren AlON-Scheibe 62 erstreckt sich eine Polyurethanschicht 61 als Verbundschicht, die einen Verbund zwischen der äußeren Glasscheibe 60 und der mittleren AlON-Scheibe 42 ausbildet. Die Polyurethanschicht 61 bzw. Polyurethanfolie ist umriss- und flächendeckungsgleich zur äußeren Glasscheibe 60. Zwischen der mittleren AlON-Scheibe 62 und der inneren Glasscheibe 64 ist z.B. eine weiter Polyurethanschicht 63 als Verbundschicht ausgebildet, die wiederum einen festen Verbund zwischen diesen an ihr anliegenden Scheiben 62 und 64 herstellt. Die Polyurethanschicht 63 ist zumindest flächenmäßig deckungsgleich zur an ihr anstoßenden Oberfläche der inneren Glasscheibe 64.

Die innere Glasscheibe 64 ragt über die äußere Glasscheibe 60 hinaus, was bedeutet, dass die Umfangsseiten dieser Scheiben nicht bündig zueinander sind.

Am Umfangsrand der Panzerungsscheibe von Fig. 5 ist eine gesinterte Verstärkung 67 aus AlON vorgesehen, die als ein am Rand der Panzerungsscheibe von Fig. 5 angeordneter, einstückiger, umlaufender oder z.B. dreischenkliger Profilrahmen ausgebildet ist, der zusammen mit der AlON-Scheibe 62 einstückig ausgebildet ist. Die AlON-Verstärkung 67 hat einen umlaufenden Hauptabschnitt 67.1 mit einem rechteckigen Querschnitt, einen ebenso umlaufenden Vorsprung 68 der randseitig am Umfang der Panzerungsscheibe radial absteht, und einen umlaufenden Stegabschnitt 67.2, der von dem Hauptabschnitt 67.1 aus in die AlON-Scheibe 62 übergeht.

Im Bereich des Vorsprungs 68 ist die transparente Panzerungsscheibe von Fig. 5 somit dünner als sonst. Der Vorsprung 68 dient auch hier zum Eingreifen in einen Karosserierahmen.

Einer Abscherung der AlON-Verstärkung 67 am Übergangsbereich zwischen der AlON-Verstärkung 67 und dem Umfang des Scheibenpakets durch äußere Krafteinwirkung ist durch das einstückige Ausbilden der AlON-Verstärkung 67 mit der mittleren AlON-Scheibe 62 als ein AlON-Teil und durch die unbündige Auslegung der Umfangsseiten der Glasscheiben 60 und 64. Einer Abscherung des Vorsprungs 68 durch äußere Krafteinwirkung ist durch die massive Ausbildung des Vorsprungs 68 mit entsprechend großer Dicke des Vorsprungs 68 vorgebeugt.

Bei einer beispielhaften Panzerungsscheibe der Erfindung gemäß Fig. 5 beträgt die Dicke der äußeren Glasscheibe 60 etwa 3 mm und die Dicke des Vorsprungs 68 der AlON-Verstärkung 67 etwa 5 mm bis 8 mm. Die mittlere AlON-Scheibe 62 und die innere Glasscheibe 64 sind jeweils 3 mm dick. Die Dicken der Polyurethanschichten 61, 63 und 65 betragen jeweils z.B. 1 mm.

Auf der gesamten Innenfläche der Panzerungsscheibe ist noch eine Schichtenfolge aus einer Polyurethanschicht 65 und einer Polycarbonatschicht 66 in dieser Reihenfolge ganzflächig aufgetragen, wobei die Dicken dieser Schichten jeweils 1 mm betragen können.

Bei der Herstellung der in Fig. 5 gezeigten Panzerungsscheibe wird zunächst die AlON-Verstärkung 67 als geschlossener, mehrschenkliger AlON-Rahmen zusammen mit der AlON-Scheibe 62 aus pulverförmigen Ausgangsmaterialien mit den Verfahrensschritten A bis E als einstückiges AlON-Teil bzw. AlON-Rohteil hergestellt, wobei die Verfahrensschritte im Zusammenhang mit der Panzerungsscheibe von Fig. 1 bereits vorstehend ausführlich erläutert worden sind.

Bei der Herstellung der in Fig. 5 gezeigten, erfindungsgemäßen Panzerungsscheibe werden die äußere Glasscheibe 40, das AlON-Teil 80 mit der AlON-Randverstärkung 67 und der mittleren AlON-Scheibe 62 und die innere Glasscheibe 64 zunächst auf einer Transportstrecke gewaschen und getrocknet. Anschließend wird eine Sandwichstruktur in einem staubfrei gehaltenen und klimatisierten Raum hergestellt. Dabei wird eine Polyurethanfolie als Polyurethanschicht 61 mit einer Stärke von 1 mm - aus einem typischen Bereich für die Folienstärke zwischen ungefähr 0,3 mm bis 5 mm - manuell, halbautomatisch oder vollautomatisch flächendeckend in eine Aufnahme 81 des AlON-Teils 80 eingelegt und ausgerichtet.

Anschließend wird die äußere Glasscheibe 60 in die Ausnehmung 81 auf die Polyurethanschicht 61 eingelegt.

Nun wird eine weitere Polyurethanfolie als Polyurethanschicht 63 mit einer Stärke von 1 mm - aus einem typischen Bereich für die Folienstärke zwischen ungefähr 0,3 mm bis 5 mm - manuell, halbautomatisch oder vollautomatisch flächendeckend in eine weitere, nach innen weisende Aufnahme 82 des AlON-Teils 80 eingelegt und ausgerichtet. Anschließend wird die innere Glasscheibe 64 in die Ausnehmung 82 auf die Polyurethanschicht 63 eingelegt.

Aus der so präparierten Sandwichstruktur wird anschließend unter Erwärmung und Verpressung in dem Vorverbundofen ein Vorverbund mit partiell plastifizierten Folien hergestellt. Bei der Vorbehandlung wird die eingeschlossene Luft aus der Sandwichstruktur möglichst vollständig herausgepresst.

Anschließend wird die so vorbehandelte Sandwichstruktur in den Autoklaven verbracht. In dem Autoklaven werden bei einem genau definierten Druck- und Temperaturzyklus die Einzelkomponenten der vorbehandelten Sandwichstruktur miteinander verbunden. Der Autoklavenzyklus wird vorstehend mit Bezug auf die Panzerungsscheibe von Fig. 1 erläutert. Nach der Beendigung des Autoklavenzyklus wird die Sandwichstruktur entnommen.

Danach wird auf die Innenfläche der entnommenen Verbundstruktur die Polyurethanschicht 65 und die Polykarbonatschicht 66 in dieser Reihenfolge aufgelegt und wider in dem Vorverbundofen und dem Autoklaven , wie bereits vorstehend erwähnt wurde, behandelt. Danach kann die fertige Panzerungsscheibe der Erfindung gemäß Fig. 5 aus dem Autoklaven entfernt werden.

In einer Modifikation der Ausführungsform der Erfindung von Fig. 5 können die äußere Glasscheibe 60 und/oder die innere Glasscheibe 64 durch jeweils eine weitere AlON-Scheibe ersetzt sein, wodurch die Panzerungsscheibe der Erfindung gemäß Fig. 5 modular an unterschiedliche ballistische Anforderungen angepasst werden kann.

## Patentansprüche

1. Panzerungsscheibe mit mehreren, schichtweise angeordneten Scheiben (40, 42, 44; 60, 62, 64) und Verbundschichten (41, 43; 61, 63), wobei mindestens eine Verbundschicht zwischen jeweils zwei aufeinanderfolgenden Scheiben angeordnet ist, um ein ballistisches Scheibenverbundpaket mit einer Randumfangsseite aus den Scheiben und Verbundschichten auszubilden, und mit einer Abstufung (49; 69), die an einem Umfangsrand der Panzerungsscheibe ausgebildet ist und einen Vorsprung (48; 68) zum Eingriff der Panzerungsscheibe in einen Kraftfahrzeug-Rahmen (10) oder Türrahmen hat,
wobei mindestens eine der Scheiben (40, 42, 44; 60, 62, 64) des Scheibenverbundpakets aus einem gesinterten AlON besteht, und
wobei ein Rahmen (47; 67) vorgesehen ist, der sich entlang zumindest eines Teils des Umfangsrands der Panzerungsscheibe ununterbrochen erstreckt, wobei der Rahmen (47; 67) an einer Randumfangsseite einer ballistischen Scheibe oder des ballistischen Scheibenverbundpakets angebracht ist, die gesamte Randumfangsseite des Scheibenverbundpakets abdeckt, aus einem gesinterten AlON besteht und einstückig mit dem Vorsprung (48; 68) ausgebildet ist.

2. Panzerungsscheibe nach Anspruch 1, **dadurch gekennzeichnet, dass** der Rahmen (47) oder Teilrahmen mittels einer Schicht (52) aus Polyurethan, Polyvinylbutyral, Ethylenvinylacetat, Polyester, Polyethylen oder Acrylkunststoff an der Randumfangsseite des Scheibenverbundpakets angebracht ist.

3. Panzerungsscheibe nach Anspruch 1 oder Anspruch 2, **dadurch gekennzeichnet, dass** das Scheibenverbundpaket an seiner Randumfangsseite eine Vertiefung (51) hat und
dass der Rahmen (47) einen Steg (50) hat, der sich in die Vertiefung (51) hinein erstreckt.

4. Panzerungsscheibe nach Anspruch 3, **dadurch gekennzeichnet, dass** das Scheibenverbundpaket mindestens eine äußere Scheibe (40), mindestens eine innere Scheibe (44) und mindestens eine mittlere Scheibe (42) hat, die zwischen der äußeren Scheibe und der inneren Scheibe angeordnet ist, wobei die äußere Scheibe (40) und die innere Scheibe (44) über die mittlere Scheibe (42) an der Randumfangsseite des Scheibenverbundpakets zum Ausbilden der Vertiefung (51) vorragen.

5. Panzerungsscheibe nach Anspruch 4, **dadurch gekennzeichnet, dass** die äußere Scheibe über die innere Scheibe an der Randumfangsseite des Scheibenverbundpakets vorragt.

6. Panzerungsscheibe nach Anspruch 4, **dadurch gekennzeichnet, dass** die innere Scheibe (64) über die äußere Scheibe (60) an der Randumfangsseite des Scheibenverbundpakets vorragt.

7. Panzerungsscheibe nach Anspruch 1, **dadurch gekennzeichnet, dass** der Rahmen (47) bündig zu einer außen liegenden Fläche des Scheibenverbundpakets ist.

8. Panzerungsscheibe nach einem der Ansprüche 1 bis 7, **dadurch gekennzeichnet, dass** der Rahmen (67) und mindestens eine (62) der Scheiben des Scheibenverbundpakets einstückig sind.

9. Panzerungsscheibe nach Anspruch 8, **dadurch gekennzeichnet, dass** der Rahmen (67) und die mittlere Scheibe (62) des Scheibenverbundpakets einstückig sind.

10. Panzerungsscheibe nach Anspruch 8, **dadurch gekennzeichnet, dass** der Rahmen und die äußere Scheibe des Scheibenverbundpakets einstückig sind.

11. Panzerungsscheibe nach Anspruch 8, **dadurch gekennzeichnet, dass** der Rahmen und die innere Scheibe des Scheibenverbundpakets einstückig sind.

## Claims

1. Armoured glazing comprising a plurality of sheets (40, 42, 44; 60, 62, 64) and laminating layers (41, 43), at least one laminating layer being arranged between two each successive sheets to form a ballistic laminate having an edge periphery of the sheets and laminating layers, and a stepped edge (49; 69) configured at a periphery of the armoured glazing and comprising a projection (48; 68) for engaging the armoured glazing in a frame (10) or door frame,
wherein at least one of the sheets (40, 42, 44; 60, 62, 64) of the laminate consists of sintered AlON, and
wherein a frame (47; 67) is provided which extends continuously along at least part of the periphery of the armoured glazing, the frame (47; 67) being attached to a edge periphery of a ballistic sheet or of the ballistic laminate, covering the whole edge periphery of the ballistic laminate, and consisting of sintered AlON, wherein the frame (47; 67) and the projection (48; 68) are configured in one piece.

2. Armoured glazing as set forth in claim 1, **characterized in that** the frame (47) or partial frame is applied to the edge periphery of the laminate of laminated sheets by means of a layer of polyurethane, polyvinylbutyral, ethylene vinyl acetate, polyester, polyethylene or an acrylic plastic material.

3. Armoured glazing as set forth in claim 1, **characterized in that** the laminate has a recess (51) at its edge periphery and that the frame (47) has a ridge (50) extending into the recess (51).

4. Armoured glazing as set forth in claim 3, **characterized in that** the laminate has at least one outer sheet (40), at least one inner sheet (44), and at least one middle sheet (42) arranged between the outer sheet and inner sheet, the outer sheet (40) and the inner sheet (44) protruding beyond the middle sheet (42) at the edge periphery of the laminate to form the recess (51).

5. Armoured glazing as set forth in claim 4, **characterized in that** the outer sheet protrudes beyond the inner sheet at the edge periphery of the laminate.

6. Armoured glazing as set forth in claim 4, **characterized in that** the inner sheet (64) protrudes beyond the outer sheet (60) at the edge periphery of the laminate.

7. Armoured glazing as set forth in claim 1, **characterized in that** the frame (47) is flush with an outer surface of the laminate.

8. Armoured glazing as set forth in any of the claims 1 to 7, **characterized in that** the frame (67) and at least one (62) of the sheets of the laminate are configured in one piece.

9. Armoured glazing as set forth in claim 8, **characterized in that** the frame (67) and the middle sheet (62) of the laminate are configured in one piece.

10. Armoured glazing as set forth in claim 8, **characterized in that** the frame and the outer sheet of the laminate are configured in one piece.

11. Armoured glazing as set forth in claim 8, **characterized in that** the frame and the inner sheet of the laminate are configured in one piece.

## Revendications

1. Vitre de blindage comprenant plusieurs vitres (40, 42, 44 ; 60, 62, 64) et couches composites (41, 43 ; 61, 63) disposées de manière stratifiée ; dans laquelle au moins une couche composite est disposée entre respectivement deux vitres successives, afin de créer un paquet composite de vitres de type balistique comprenant un côté périphérique marginal, à partir des vitres et des couches composites ; et comprenant un gradin (49 ; 69) qui est réalisé à un bord périphérique de la vitre de blindage et qui possède une saillie (48 ; 68) pour l'insertion de la vitre de blindage dans un châssis du véhicule automobile (10) ou dans un encadrement de portière ; dans laquelle au moins une des vitres (40, 42, 44 ; 60, 62, 64) du paquet composite de vitres est constitué d'AION fritté ; et dans laquelle on prévoit un encadrement (47 ; 67) qui s'étend de manière ininterrompue le long d'au moins une partie du bord périphérique de la vitre de blindage ; dans laquelle l'encadrement (47 ; 67) est appliqué contre un côté périphérique marginal d'une vitre balistique ou du paquet composite de vitres de type balistique, recouvre l'ensemble du côté périphérique marginal du paquet composite de vitres, est constitué d'AION fritté et est réalisé en une seule pièce avec la saillie (48 ; 68).

2. Vitre de blindage selon la revendication 1, **caractérisée en ce que** l'encadrement (47) ou un encadrement partiel est appliqué au moyen d'une couche (52) de polyuréthane, de polyvinylbutyral, d'éthylène-acétate de vinyle, de polyester, de polyéthylène ou d'une matière synthétique acrylique contre le côté périphérique marginal du paquet composite de vitres.

3. Vitre de blindage selon la revendication 1 ou 2, **caractérisée en ce que** le paquet composite de vitres possède, contre son côté périphérique marginal, un renfoncement (51) et **en ce que** l'encadrement (47) possède une entretoise (50) qui s'étend jusqu'à l'intérieur du renfoncement (51).

4. Vitre de blindage selon la revendication 3, **caractérisée en ce que** le paquet composite de vitres possède au moins une vitre externe (40), au moins une vitre interne (44) et au moins une vitre médiane (42) qui est disposée entre la vitre externe et la vitre interne ; dans laquelle la vitre externe (40) et la vitre interne (44) font saillie au-delà de la vitre médiane (42) contre le côté périphérique marginal du paquet composite de vitres pour la formation du renfoncement (51).

5. Vitre de blindage selon la revendication 4, **caractérisée en ce que** la vitre externe fait saillie au-delà de la vitre interne contre le côté périphérique marginal du paquet composite de vitres.

6. Vitre de blindage selon la revendication 4, **caractérisée en ce que** la vitre interne (64) fait saillie au-delà de la vitre externe (60) contre le côté périphérique marginal du paquet composite de vitres.

7. Vitre de blindage selon la revendication 1, **caractérisée en ce que** l'encadrement (47) est disposé à fleur par rapport à une surface externe du paquet composite de vitres.

8. Vitre de blindage selon l'une quelconque des revendications 1 à 7, **caractérisée en ce que** l'encadrement (67) et au moins une vitre (62) parmi les vitres du paquet composite de vitres sont réalisés en une seule pièce.

9. Vitre de blindage selon la revendication 8, **caractérisée en ce que** l'encadrement (67) et la vitre médiane (62) du paquet composite de vitres sont réalisés en une seule pièce.

10. Vitre de blindage selon la revendication 8, **caractérisée en ce que** l'encadrement et la vitre externe du paquet composite de vitres sont réalisés en une seule pièce.

11. Vitre de blindage selon la revendication 8, **caractérisée en ce que** l'encadrement et la vitre interne du paquet composite de vitres sont réalisés en une seule pièce.
